Europäisches Patentamt

European Patent Office

Office européen des brevets

(19)

(11) Numéro de publication: **0 296 907**
**B1**

(12) **FASCICULE DE BREVET EUROPEEN**

(45) Date de publication du fascicule du brevet: **23.01.91**

(51) Int. Cl.⁵: **G 01 G 3/14,** G 01 G 19/44, G 01 L 1/22

(21) Numéro de dépôt: **88401328.5**

(22) Date de dépôt: **01.06.88**

(54) Appareil de pesage à jauges d'extensométrie.

(30) Priorité: **03.06.87 FR 8707734**

(43) Date de publication de la demande:
**28.12.88 Bulletin 88/52**

(45) Mention de la délivrance du brevet:
**23.01.91 Bulletin 91/04**

(84) Etats contractants désignés:
**DE GB IT NL**

(56) Documents cités:
**EP-A-0 141 710**
**FR-A-2 038 002**
**FR-A-2 492 095**
**GB-A-2 139 769**
**US-A-3 004 231**
**US-A-3 321 964**
**US-A-3 969 935**

**PATENT ABSTRACTS OF JAPAN, vol. 11, no. 9**
**(P-534)2456r, 10 janvier 1987; & JP-A-61 184 433**
**(KUBOTA LTD) 18-08-1986**

(73) Titulaire: **SEB S.A.**
**F-21260 Selongey (FR)**

(72) Inventeur: **Anthoine-Milhomme, Didier**
**Combes Choisy**
**F-74330 La Balme de Sillingy (FR)**
Inventeur: **Depret, Claudy**
**Les Balmes§Sales**
**F-74150 Rumilly (FR)**
Inventeur: **Sarrazin, Michel**
**Marigny**
**F-74150 Massingy (FR)**

(74) Mandataire: **Bouju, André**
**Cabinet Bouju 38 avenue de la Grande Armée**
**F-75017 Paris (FR)**

Courier Press, Leamington Spa, England.

## Description

La présente invention concerne un appareil de pesage du genre balance de ménage ou pèse-personne, comportant des jauges d'extensométrie associées à un circuit électronique de mesure délivrant un signal qui est fonction du poids à mesurer.

Dans le brevet français no 2 554 229 au nom de la demanderesse, on a décrit un appareil de pesage comprenant un plateau susceptible de recevoir le poids à mesurer, un corps d'épreuve comportant sur l'une de ses faces des jauges d'extensométrie, l'une des extrémités de ce corps d'épreuve étant reliée au plateau et son autre extrémité étant reliée à un socle.

Dans cet appareil de pesage, le corps d'épreuve est constitué par un barreau en acier de section carrée.

Les deux extrémités opposées de ce barreau en acier sont solidement encastrées respectivement à une partie du plateau d'une part et à une partie du socle d'autre part.

Les jauges d'extensométrie sont disposées suivant l'axe du barreau et symétriquement de part et d'autre du milieu de ce barreau. Ces jauges comprennent quatre jauges dont les directions sont confondues avec l'axe du barreau et connectées électriquement suivant un pont de Wheatstone ainsi que deux jauges dont les directions sont à 45° de l'axe du barreau pour compenser les contraintes de torsion parasites exercées sur le barreau.

Le but de la présente invention est de simplifier la réalisation de l'appareil de pesage précité en vue d'en réduire le coût.

Suivant l'invention, cet appareil de pesage est caractérisé en ce que le corps d'épreuve est une plaque en matériau élastique réalisée d'une seule pièce avec une plaque formant plateau ou socle, ces deux plaques formant entre elles sensiblement un U.

Etant donné que le Plateau ou le socle et le corps d'épreuve sont constitués par deux plaques reliées l'une à l'autre suivant un U, on obtient un ensemble plateau-corps d'épreuve ou socle-corps d'épreuve très simple à réaliser dans lequel les problèmes liés à l'obtention d'un encastrement parfait du corps d'épreuve au plateau ou au socle sont surmontés d'une manière économique et efficace.

Selon une version avantageuse de l'invention, la plaque formant corps d'épreuve et la plaque formant plateau ou socle sont réalisées par pliage ou emboutissage d'une tôle métallique.

Cette opération de pliage ou d'emboutissage d'une tôle métallique, par exemple en acier, est simple et économique à mettre en oeuvre et est parfaitement compatible avec une production en grande série.

Les jauges d'extensométrie peuvent être mises en place sur la tôle métallique avant ou après pliage ou emboutissage de cette tôle.

Les essais effectués par la demanderesse ont permis de constater de façon surprenante que le fait que les jauges d'extensométrie soient disposées sur une tôle métallique au lieu d'être disposées sur un barreau n'affectait pas les résultats des mesures, étant donné que cette tôle est capable de reproduire fidèlement les efforts de flexion et de torsion engendrés par le poids appliqué sur le plateau.

Selon une version préférée de l'invention, la plaque formant plateau présente des éléments raidisseurs pour empêcher que le plateau fléchisse dans son propre plan.

Ainsi, lorsqu'un poids s'applique sur le plateau, celui-ci ne risque pas de fléchir, De ce fait, seule la plaque formant corps d'épreuve est susceptible de fléchir et d'engendrer par l'intermédiaire des déformations subies par les jauges d'extensométrie, un signal électrique qui est fonction du poids appliqué sur le plateau.

Dans une réalisation simplifiée de l'invention, l'ensemble constitué par le plateau, le corps d'épreuve et le socle est réalisé par pliage à partir d'une tôle métallique.

Dans une autre réalisation de l'invention, l'ensemble constitué par le plateau, le corps d'épreuve et le socle est réalisé à partir d'un profilé en matériau élastique coupé perpendiculairement à sa longueur et dont la section présente sensiblement deux U adjacents dont les bases sont dirigées à l'opposé l'une de l'autre, c'est-à-dire formant sensiblement un S.

D'autres particularités et avantages de l'invention apparaîtront encore dans la description ci-après.

Aux dessins annexés, donnés à titre d'exemples non limitatifs:

la figure 1 est une vue schématique en perspective d'un appareil de pesage conforme à l'invention,

la figure 2 est une vue de dessous de la plaque formant corps d'épreuve de l'appareil de pesage,

la figure 3 est une vue en élévation d'une seconde réalisation d'un appareil de pesage conforme à l'invention,

la figure 4 est une vue de dessous de l'appareil selon la figure 3.

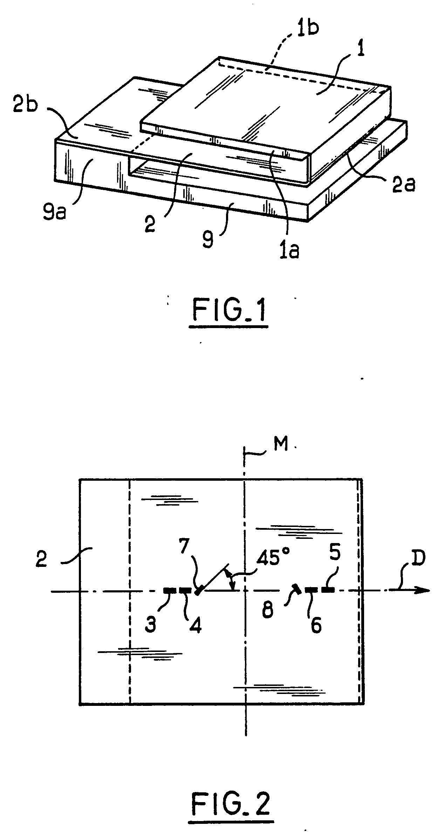

Dans la réalisation des figures 1 et 2, l'appareil de pesage, tel que balance ménagère ou pèse-personne comprend un plateau 1 susceptible de recevoir le poids à mesurer et un corps d'épreuve 2 comportant sur l'une de ses faces des jauges d'extensométrie 3, 4, 5, 6, 7, 8 (voir figure 2).

L'une 2a des extrémités du corps d'épreuve 2 est reliée au plateau 1 et son autre extrémité 2b est reliée à un socle 9 s'étendant parallèlement au corps d'épreuve 2 et au plateau 1.

Conformément à l'invention, le corps d'épreuve 2 est une plaque en métal élastique qui est réalisée d'une seule pièce avec une plaque formant le plateau 1, ces deux plaques 2, 1 formant entre elles sensiblement un U.

Dans la réalisation représentée sur les figures 1 et 2, la plaque formant corps d'épreuve 2 et la plaque formant plateau 1 sont réalisées par pliage ou emboutissage d'une tôle métallique, par exemple en acier.

Les jauges d'extensométrie 3, 4, 5, 6, 7, 8 sont appliquées sur la face de dessous de la plaque formant le corps d'épreuve 2. Ces jauges 3, 4, 5, 6, 7, 8 sont disposées dans la direction D de l'axe du corps d'épreuve 2 et symétriquement de part et d'autre du milieu M de ce corps d'épreuve comme indiqué sur la figure 2.

Les directions des jauges 3, 4, 5, 6 sont confondues avec l'axe D. Ces jauges 3, 4, 5, 6 sont connectées électriquement de façon à former un pont de Wheatstone qui délivre un signal électrique qui est fonction du poids à mesurer qui est appliqué sur le plateau 1, Les jauges 7, 8 forment un angle de 45° avec la direction D et servent à compenser les efforts de torsion parasites appliqués sur la plaque 2, comme indiqué dans le brevet français no 2 554 229 de la demanderesse.

Les jauges 3, 4, 5, 6, 7, 8 ainsi que le circuit électrique associé à celles-ci peuvent être appliqués sur la plaque 2 avant ou après le pliage ou l'emboutissage de la tôle métallique.

Dans la réalisation représentée sur les figures 1 et 2, l'extrémité 2b de la plaque 2 formant le corps d'épreuve est fixée par soudage ou tout autre moyen à un bossage parallélépipédique 9a du socle 9.

Dans une réalisation simplifiée de l'invention, l'ensemble constitué par le plateau 1, le corps d'épreuve 2 et le socle 9 est réalisé par pliage à partir d'une tôle métallique.

Comme indiqué sur la figure 1, la plaque formant plateau 1, présente dans la direction D qui s'étend perpendiculairement à la base du U qu'elle forme avec la plaque 2 constituant le corps d'épreuve, des éléments raidisseurs 1a, 1b réalisés par repliage des bords de la plaque 1 pour empêcher que cette plaque fléchisse dans son propre plan indépendamment du corps d'épreuve 2.

L'épaisseur et les propriétés mécaniques de la tôle pliée en U constituant les plaques 1 et 2 doivent être telles que sous l'effet du poids appliqué sur le plateau 1, la limite élastique de la tôle ne soit pas dépassée. De préférence, pour plus de sécurité, on maintiendra la contrainte appliquée inférieure à 50% de la limite élastique de la tôle.

On a réalisé à titre d'exemple, une balance ménagère d'une portée égale à 2 kg avec une résolution de 2 g à partir d'une tôle d'acier ordinaire décarburée d'épaisseur égale à 0,8 mm pliée comme indiqué sur la figure 1, de façon que le corps d'épreuve ait des dimensions égales à 100 x 100 mm. Les jauges 3, 4, 5, 6, 7, 8 peuvent être fixées sur la plaque 2 formant le corps d'épreuve par collage comme cela est fait traditionnellement.

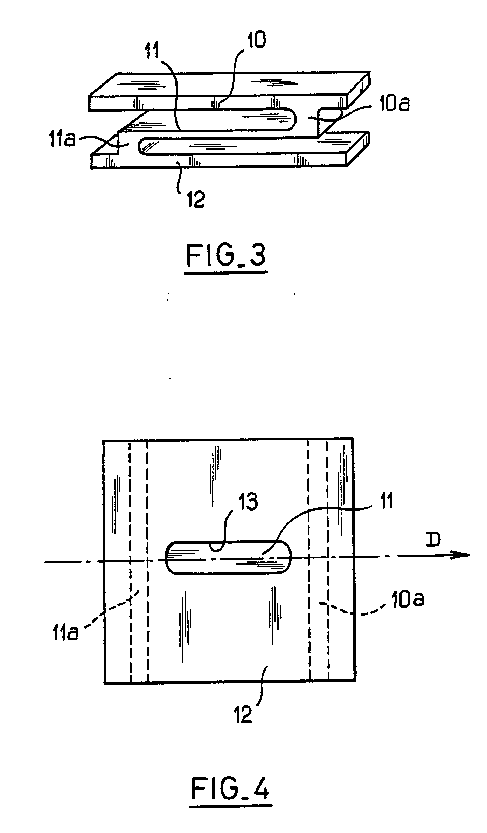

Dans la réalisation représentée sur les figures 3 et 4, l'ensemble constitué par le plateau 10, le corps d'épreuve 11 et le socle 12, est réalisé à partir d'un profilé extrudé en matériau élastique, coupé perpendiculairement à sa longueur. La section de ce profilé présente comme indiqué sur la figure 3, deux U adjacents dont les bases 10a et 11a sont dirigées à l'opposé l'une de l'autre, c'est-à-dire formant sensiblement un S.

Comme indiqué sur la figure 4, la plaque 12 formant socle présente une ouverture 13 allongée dans la direction D perpendiculaire aux bases 10a et 11b. Cette ouverture 13 donne accès à la face adjacente de la plaque 11 formant le corps d'épreuve pour y appliquer les jauges d'extensométrie.

Cette ouverture 13 pourrait également être pratiquée dans la plaque 10 formant plateau.

Le matériau élastique constituant l'appareil de pesage représenté sur les figures 3 et 4 peut être de l'acier, de l'aluminium ou une matière plastique composite (chargée de fibres de verre, de carbone, de métal, etc).

La fabrication de cet appareil de pesage à partir d'un profilé en matière élastique est également simple, peu coûteuse et parfaitement adaptée à une production en grande série.

Bien entendu, la balance représentée sur la figure 3 pourrait également être réalisée d'une seule pièce sensiblement en forme de S, par moulage ou surmoulage d'une matière élastique (résine chargée de fibres, acier, aluminium).

## Revendications

1. Appareil de pesage comprenant un plateau (1, 10) susceptible de recevoir le poids à mesurer, un corps d'épreuve (2, 11) comportant sur l'une de ses faces des jauges d'extensométrie (3, 4, 5, 6, 7, 8), l'une des extrémités de ce corps d'épreuve étant reliée au plateau et son autre extrémité étant reliée à un socle (9, 12), caractérisé en ce que le corps d'épreuve (2, 11) est une plaque en matériau élastique réalisée d'une seule pièce avec une plaque formant plateau (1, 10) ou socle (9, 12), ces deux plaques formant entre elles sensiblement un U.

2. Appareil conforme à la revendication 1, caractérisé en ce que la plaque formant corps d'épreuve (2) et la plaque formant plateau (1) sont réalisées par pliage ou emboutissage d'une tôle métallique.

3. Appareil conforme à la revendication 2, caractérisé en ce que la tôle métallique est en acier.

4. Appareil conforme à l'une des revendications 2 ou 3, caractérisé en ce que la plaque (1) formant plateau présente des éléments raidisseurs (1a, 1b) pour empêcher que le plateau fléchisse dans son propre plan.

5. Appareil conforme à l'une des revendications 2 à 4, caractérisé en ce que l'ensemble constitué par le plateau, le corps d'épreuve et le socle est réalisé par pliage à partir d'une tôle métallique.

6. Appareil conforme à la revendication 1, caractérisé en ce que l'ensemble constitué par le plateau (10), le corps d'épreuve (11) et le socle (12) est réalisé à partir d'un profilé en matériau élastique coupé perpendiculairement à sa longueur et dont la section présente sensiblement deux U adjacents dont les bases (10a, 11a) sont dirigées à l'opposé l'une de l'autre.

7. Appareil de pesage conforme à la revendication 6, caractérisé en ce que la plaque (12) formant socle ou la plaque (11) formant plateau présente une ouverture (13) qui donne accès à la face adjacente de la plaque (11) formant le corps d'épreuve pour y appliquer les jauges d'extensométrie (3, 4, 5, 6, 7, 8).

8. Appareil de pesage conforme à la revendication 1, caractérisé en ce que l'ensemble constitué par le plateau (10), le corps d'épreuve (11) et le socle (12) est réalisé par moulage ou surmoulage et sa section forme sensiblement un S.

**Patentansprüche**

1. Wiegegerät mit einem Plateau (1, 10) zur Aufnahme des zu messenden Gewichtes einem Testkörper (2, 11) der auf seiner einen Fläche Dehnungsmeßsatreifen (3, 4, 5, 6, 7, 8) aufweist, wobei eines der Enden dieses Testkörpers mit dem Plateau und sein anderes Ende mit einem Sockel (9, 12) verbunden ist, dadurch gekennzeichnet, daß der Testkörper (2, 11) eine Platte aus elastischem Material ist, welche einteilig mit einer das Plateau (1, 10) bildenden Platte oder einem Sockel (9, 12) ausgeführt ist, wobei diese zwei Platten miteinander im wesentlichen ein U bilden.

2. Gerät nach Anspruch 1, dadurch gekennzeichnet, daß die den Testkörper (2) bildende Platte und die das Plateau (1) bildende Platte durch Biegen oder Prägen eines Metallblechs hergestellt sind.

3. Gerät nach Anspruch 2, dadurch gekennzeichnet, daß das Metallblech aus Stahl ist.

4. Gerät nach Anspruch 2 oder 3, dadurch gekennzeichnet, daß die das Plateau bildende Platte (1) Versteifungselemente (1a, 1b) aufweist, um zu verhindern, daß sich das Plateau in seiner eigenen Ebene durchbiegt.

5. Gerät nach einem der Ansprüche 2 bis 4, dadurch gekennzeichnet, daß die Gesamtheit aus dem Plateau, dem Testkörper und dem Sockel durch Biegen eines Metallblechs hergestellt ist.

6. Gerät nach Anspruch 1, dadurch gekennzeichnet, daß die Gesamtheit aus dem Plateau (10), dem Testkörper (11) und dem Sockel (12) aus einem Profilelement aus elastischem Material hergestellt ist, welches senkrecht zu seiner Längserstreckung geschnitten ist und dessen Querschnitt im wesentlichen zwei nebeneinanderliegende U-Formen aufweist, deren Grundflächen (10a, 11a) voneinander fort gerichtet sind.

7. Wiegegerät nach Anspruch 6, dadurch gekennzeichnet, daß die den Sockel bildende Platte (12) oder die das Plateau bildende Platte (11) eine Öffnung (13) aufweist, welche Zugang zu der benachbarten Fläche der Platte (11) gewährt, welche den Testkörper bildet, um die Dehnungsmeßstreifen (3, 4, 5, 6, 7, 8) darauf anzubringen.

8. Wiegegerät nach Anspruch 1, dadurch gekennzeichnet, daß die aus dem Plateau (10), dem Testkörper (11) und dem Sockel (12) gebildete Einheit durch Formen oder Überformen gebildet ist und ihr Querschnitt im wesentlichen S-förmig ist.

**Claims**

1. A weighing device comprising a platform (1, 10) adapted to receive the weight for measurement, a test member (2, 11) having strain gauges (3, 4, 5, 6, 7, 8) on one of its surfaces, one of the ends of said test member being connected to the platform and its other end being connected to a base (9, 12), characterised in that the test member (2, 11) is a plate of elastic material made in one piece with a plate forming a platform (1, 10) or base (9, 12), said two plates together substantially forming a U.

2. A device according to claim 1, characterised in that the plate forming the test member (2) and the plate forming the platform (1) are made by bending or stamping a metal sheet.

3. A device according to claim 2, characterised in that the metal sheet is made of steel.

4. A device according to claim 2 or 3, characterised in that the platform plate (1) has stiffening elements (1a, 1b) to prevent the plate from bending in its own plane.

5. A device according to any one of claims 2 to 4, characterised in that the assembly comprising the platform, test member and base is made by bending a metal sheet.

6. A device according to claim 1, characterised in that the assembly comprising the platform (10), test member (11) and base (12) is made from a section member of elastic material cut perpendicularly to its length and the section of which has substantially two adjacent U's, the bases (10a, 11a) of which are directed in opposite directions.

7. A weighing device according to claim 6, characterised in that the base plate (12) or the platform plate (11) has an aperture (13) giving access to the adjacent surface of the test member plate (11) so that the strain gauges (3, 4, 5, 6, 7, 8) can be applied thereto.

8. A weighing device according to claim 1, characterised in that the assembly comprising the plate (10), test member (11) and base (12) is made by casting or by moulding from a casting and its section is substantially S-shaped.

FIG.1

FIG.2

FIG_3

FIG_4